# EUROPÄISCHE PATENTANMELDUNG

(11) **EP 2 315 159 A2**
(43) Veröffentlichungstag der Anmeldung: **27.04.2011**
(21) Anmeldenummer: 10188466.6
(22) Anmeldetag: 22.10.2010
(51) Int. Cl.: G06K 9/20

(54) **Verfahren und Vorrichtung zum Erkennen und Klassifizieren von Dokumentteilen eines rechnerverfügbaren Dokuments durch schrittweises Lernen aus mehreren Trainingsmengen**

(30) Priorität: 26.10.2009 DE 102009050681
(71) Anmelder: SIEMENS AKTIENGESELLSCHAFT, 80333 München (DE)
(72) Erfinder: Kinnemann, Henrik, 78467, Konstanz (DE); Stoffel, Andreas, 78343, Gaienhofen (DE); Keim, Daniel, 78256, Steisslingen (DE); Spretke, David, 8280, Kreuzlingen (CH)

(57) **Zusammenfassung**

Die Erfindung betrifft ein Verfahren und eine Vorrichtung zum Erkennen von Dokumentteilen eines rechnerverfügbaren Dokuments durch schrittweises Lernen aus mehreren Trainingsmengen. Vorgegeben werden eine Start-Trainingsmenge (S-TM), mindestens eine weitere Trainingsmenge (TM(i)) und ein Initial-Klassifikator (I-K1). Zunächst wird aus dem Initial-Klassifikator (I-K1) ein Start-Klassifikator (S-K1) generiert (Schritt S10). Hierfür wird für jedes Dokumentteil jedes Dokuments der Start-Trainingsmenge (S-TM) erfasst, von welcher Dokumentteil-Art dieses Dokumentteil ist, und zum Trainieren verwendet. Im mindestens einem weiteren Trainingsschritt (Schritt TS(i)) wird aus dem Start-Klassifikator S-K1 der Klassifikator (K1) erzeugt, wofür die weitere Trainingsmenge (TM(i)) verwendet wird. Nur dann wird eine Vorgabe, von welcher Dokumentteil-Art ein Dokumentteil eines Dokuments der weiteren Trainingsmenge (TM(i)) ist, verwendet, wenn ein Dokumentteil des Dokuments mit einem geringen Sicherheitsmaß klassifiziert wurde.

## Beschreibung

Die Erfindung betrifft ein Verfahren und eine Vorrichtung zum Erkennen und Klassifizieren von Dokumentteilen eines rechnerverfügbaren Dokuments durch schrittweises Lernen aus mehreren Trainingsmengen.

In US 6,295,387 B1 wird ein Verfahren beschrieben, um die Wahrhaftigkeit ("veracity") eines automatischen Erkennungsverfahrens zu überprüfen. Ein rechnerverfügbares Dokument wird automatisch per OCR ausgewertet. Erkannt wird, welche Erkennungsergebnisse ein geringes Sicherheitsmaß haben. Ein Bearbeiter gibt manuell die richtigen Erkennungsergebnisse ein. Eine zufällige Auswahl von Erkennungsergebnissen wird mit der manuellen Eingabe verglichen.

In US 5,159,667 werden ein Verfahren und eine Vorrichtung beschrieben, um rechnerverfügbare Dokumente mit jeweils mindestens einer Seite zu analysieren. Ein Segmentierungsprogramm zerlegt ein rechnerverfügbares Abbild einer Seite in Dokumentteile ("segmented areas") und extrahiert Merkmale ("structural characteristics") jedes Dokumentteils. Zum Zerlegen eines Dokuments werden Histogramme in x- und in y-Richtung erzeugt. In einer Wissensbasis ("document knowledge base 8") sind Merkmale ("characteristics") von möglichen Dokumentteil-Arten auf verschiedenen Hierarchieebenen ("layers") abgespeichert. Diese Wissensbasis wird durch ein "learning and correction programm 12" aufgebaut. Ein Benutzer klassifiziert manuell Dokumentteile von beispielhaften Dokumenten, wobei der Benutzer das Dokument manuell in Dokumentteile zerlegt und jedem Dokumentteil eine Dokumentteil-Art zuordnet. Die Ergebnisse des Benutzers werden in der Wissensbasis 8 abgespeichert. Mit Hilfe dieser Wissensbasis 8 werden die durch Zerlegung gewonnenen Dokumentteile klassifiziert, wobei jedes mögliche Klassifikationsergebnis mit einer Gewichtung versehen wird. Um ein Dokumentteil automatisch zu klassifizieren ("matching the segmented area with an object in the knowledge base 8"), wird ein rekursives Verfahren durchgeführt.

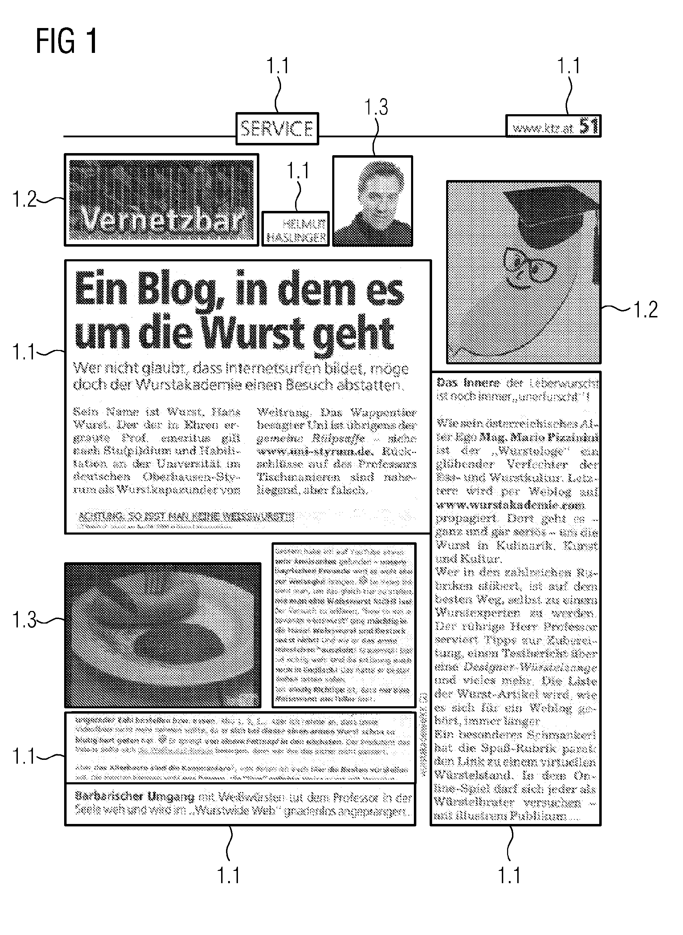

In D.D.Lewis et. al.: "A sequential algorithm for training text classifiers", in Proceedings of the 17th Annual International ACM SIGIR Conference on Research and Development in Information Retrieval Dublin, Ireland, 1994, S. 3 - 12, und dort auf S. 4, Abs. 5, wird ein sequentielles Verfahren beschrieben, um Text-Klassifikatoren zu trainieren. Durch einen "uncertainty sampling algorithm" (vgl. Fig. 1) wird zunächst ein Initial-Klassifikator ("initial classifier") erzeugt. Der aktuelle Klassifizierer, also am Anfang des Trainings der Initial-Klassifikator, wird auf eine Trainingsmenge ("examples") angewendet. Für jedes Stichprobenelement ("example") nimmt der aktuelle Klassifikator automatisch eine Klassifikation vor und berechnet außerdem jeweils ein Sicherheitsmaß für das Klassifikationsergebnis, wofür Berechnungsvorschriften präsentiert werden. Die b Stichprobenelemente mit den geringsten Sicherheitsmaßen ("least certain of class membership") werden einem Benutzer präsentiert, der diese Elemente manuell klassifiziert. Aus dem aktuellen Klassifikator wird unter Verwendung der b manuell klassifizierten Stichprobenelemente ein neuer Klassifikator erzeugt. Bei einem erneuten Durchlauf wird der neue Klassifikator als aktueller Klassifikator verwendet.

Im Zhang, Yi, et al.: "Learning from multi-topic web documents for contextual advertisement" in Proceedings of the 14th ACM SIKDD International Conference on Knowledge Discovery and Data Mining, Las Vegas, USA, 2008, S. 1051 - 1059, Abs. 5.2, wird ein Verfahren beschrieben, um Internet-Auftritte mit "web pages" zu analysieren mit dem Ziel, dort kontextabhängig Werbung zu platzieren und negative Effekte beim Werben zu vermeiden. Dokumentteile in einer Webpage sind z. B. Sätze oder HTML-Blöcke. Der Kontext von Dokumentteilen wird durch die Klassifikation erkannt. Ein Klassifikator wird trainiert, wofür eine Stichprobe mit manuell klassifizierten Dokumentteilen verwendet wird.

Lernende Verfahren sind auch aus folgenden Veröffentlichungen bekannt:
M.Agrawal, D.Doermann: "Voronoi++: A Dynamic Page Segmentation approach based on Voronoi and Docstrum features", Internat. Conf. on Document Analysis and Recognition (ICDAR '09), 2009.
A.Anjewierden: "AIDAS: Incremental Logical Structure Discovery in PDF Documents". Internat. Conf. on Document Analysis and Recognition (ICDAR '01), 2001.
H.S.Baird: "Background structure in document images". Document Image Analysis, World Scientific, 1994.
T.Breuel: "An Algorithm for Finding Maximal Whitespace Rectangles at Arbitrary Orientations for Document Layout Analysis", Proc. of Internat. Conf. on Document Analysis and Recognition, 2003.
R. Brugger, A. Zramdini, R. Ingold: "Modeling Documents for Structure Recognition Using Generalized N-Grams". Internat. Conf. on Document Analysis and Recognition (ICDAR '97), 1997.
D.Cai, S.Yu, J.-R.Wen, W.-Y.Ma: "Extracting Content Structure for Web Pages based on Visual Representation", 5th Asia Pacific Web Conference (APWeb2003), 2003.
L.O.Gorman: "The document spectrum for page layout analysis", IEEE Transactions on Pattern Analysis & Machine Intelligence, 15, 1993.
J. C. Handley, A.M. Namboodiri, R. Zanibbi: "Document Understanding System Using Stochastic Context-Free Grammars". Internat. Conf. on Document Analysis and Recognition (ICDAR '05), 2005.
Y. Ishitani: "Logical Structure Analysis of Document Images Based on Emergent Computation". IEICE - Transactions on Information Systems, Vol. E88-D, No. 8, 2005.
S. Klink, A. Dengel, T. Kieninger: "Document Structure Analysis Based on Layout and Textual Features". In Proceedings of the 4th IAPR International Workshop on Document Analysis Systems (DAS 2000), Rio de Janeiro, Brazil, December 2000.
B. Klein, P. Fankhauser: "Error tolerant Document Structure Analysis". In IEEE ADL '97: Proceedings of the IEEE international forum on Research and technology advances in digital libraries, Washington, DC, USA, 1997. IEEE Computer Society.
Kise, K., Sato, A., Iwata, M.: Segmentation of page images using the area Voronoi diagram. Computer Vision and Image Understanding (CVIU), 70, 1998.
J. Kim, D.X. Le, G.R. Thoma: "Automated Labeling in Document Images". Proc. SPIE Vol. 4307, Document Recognition and Retrieval VIII, 2000.
B.Kruatrachue, N.Moongfangklang, K.Siriboon: "Fast Document Segmentation Using Contour and X-Y Cut Technique", World Academy of Science, Engineering and Technology, 5, 2005.
G.Nagy, S.Seth, M.Viswanathan: "A prototype document image analysis system for technical journals", Computer 7, 1992.
K. Nakagawa, A. Nomura, M. Suzuki: "Extraction of Logical Structure from Articles in Mathematics". Proceedings of Mathematical Knowledge Management, 3rd Intl. Conf, MKM 2004, volume 3119 of Lecture Notes in Computer Science, Springer, 2004.
S. Ratte, W. Njomgue, P.-A. Menard: "Highlighting Document's Structure". In: Proc. of World Academy of Science, Engineering and Technology, Vol. 25, 2007.

In US 7,092,870 B2 wird ein Verfahren beschrieben, um eine textliche Datenbank zu verwalten und auszuwerten. Die textlichen Dokumente werden automatisch ausgewertet, um semantische Deskriptoren zu finden. Diese Deskriptoren werden abgespeichert und bei Bedarf ausgewertet.

Der Erfindung liegt die Aufgabe zugrunde, ein Verfahren und eine Vorrichtung bereitzustellen, bei denen ein Klassifikator ein rechnerverfügbares Dokument automatisch analysiert, wobei der Klassifikator in einer Trainingsphase mit Hilfe einer Stichprobe trainiert wird und wobei der in der Trainingsphase erforderliche manuelle Eingabeaufwand gering sein soll.

Die Aufgabe wird durch ein Verfahren mit den Merkmalen des Anspruchs 1 und eine Vorrichtung mit den Merkmalen des Anspruchs 6 gelöst. Vorteilhafte Ausgestaltungen sind in den Unteransprüchen angegeben.

Lösungsgemäß wird ein Klassifikator generiert. Dieser Klassifikator vermag ein rechnerverfügbares Dokument in seine Dokumenteile zu zerlegen und jedes Dokumentteil zu klassifizieren. Der Schritt, ein Dokumentteil zu klassifizieren, liefert als Ergebnis die Information, von welcher Dokumentteil-Art dieses Dokumentteil ist. Mehrere mögliche Dokumentteil-Arten für das Dokument werden vorgegeben. Die möglichen Dokumentteil-Arten können von Dokument zu Dokument variieren. Der Klassifikator ist Bestandteil einer Datenverarbeitungsanlage. Der Klassifikator wird in einer vorhergehenden Trainingsphase generiert. In der Trainingsphase wird zunächst aus einem vorgegebenen Initial-Klassifikator ein Start-Klassifikator generiert. Anschließend wird mindestens ein Trainingsschritt durchgeführt, um aus dem Start-Klassifikator den produktiv verwendeten Klassifikator zu erzeugen.

Um den Start-Klassifikator zu generieren, wird eine Start-Trainingsmenge mit mehreren rechnerverfügbaren Dokumenten vorgegeben. Der Initial-Klassifikator zerlegt jedes Dokument der Start-Trainingsmenge in seine Dokumentteile. Der Initial-Klassifikator klassifiziert nicht selber diese Dokumentteile. Vielmehr wird für jedes Dokumentteil jedes Dokuments der Start-Trainingsmenge, eine Vorgabe erfasst von welcher Dokumentteil-Art dieses Dokumentteil ist. Diese Vorgabe stammt z.B. von einem Benutzer. Möglich ist, dass auch Vorgaben über die Zerlegung eines Dokuments der Start-Trainingsmenge in Dokumentteile erfasst werden. Der Initial-Klassifikator wird mit den erfassten Vorgaben trainiert. Dieses Trainieren liefert den Start-Klassifikator.

Um aus dem Start Klassifikator den produktiven Klassifikator zu erzeugen, wird mindestens eine weitere Trainingsmenge vorgegeben, und pro Trainingsmenge wird jeweils ein Trainingsschritt durchgeführt. In dem oder jedem Trainingsschritt wird aus dem vorhergehenden Klassifikator unter Verwendung der Trainingsmenge ein nachfolgender Klassifikator erzeugt. In dem Trainingsschritt oder dem ersten Trainingsschritt wird als vorhergehender Klassifikator der Start-Klassifikator verwendet. Der letzte durchgeführte Trainingsschritt liefert als nachfolgenden Klassifikator den produktiv verwendeten Klassifikator.

Auch die oder jede weitere Trainingsmenge umfasst rechnerverfügbare Dokumente. Der vorhergehende Klassifikator zerlegt jedes Dokument der Trainingsmenge in seine Dokumentteile und klassifiziert diese Dokumentteile, indem der vorhergehende Klassifikator jedem Dokumentteil eine Dokumentteil-Art zuordnet. Außerdem berechnet der vorhergehende Klassifikator ein Klassifikations-Sicherheitsmaß für das Dokument, das ist ein Maß für die Sicherheit, dass alle Dokumentteile des Dokuments richtig klassifiziert worden sind. Dann, wenn dieses Klassifikations-Sicherheitsmaß eines Dokuments kleiner als eine vorgegebene Schranke ist, wird für mindestens ein Dokumentteil dieses Dokuments eine Vorgabe erfasst, von welcher Dokumentteil-Art dieses Dokumentteil tatsächlich ist. Der vorhergehende Klassifikator wird mit den erfassten Vorgaben für die Trainingsmenge trainiert.

Beim lösungsgemäßen Verfahren ist manueller Aufwand erforderlich, um vorzugeben, von welcher Dokumentteil-Art ein Dokumentteil ist. Diese Vorgabe wird automatisch erfasst. Eine solche manuelle Vorgabe wird lösungsgemäß für jedes Dokument der Start-Trainingsmenge durchgeführt, aber für ein Dokument der weiteren Trainingsmenge nur dann, wenn das Klassifikations-Sicherheitsmaß für dieses Dokument unter der vorgegebenen Schranke liegt. Dadurch ist viel weniger manueller Aufwand erforderlich, als wenn für jedes Dokumentteil der Stichprobe die jeweilige Dokumentteil-Art manuell klassifiziert und diese Vorgabe erfasst werden müsste.

Der Start-Klassifikator wird anschließend gerade mit denjenigen Dokumentteile von Dokumenten der weiteren Trainings-Menge trainiert, für die der Start-Klassifikator schlechte Ergebnisse liefert. Gerade für diese Dokumentteile werden manuell die tatsächlichen, also richtigen Klassifikationsergebnisse erfasst. Dadurch wird der Start-Klassifikator mit einer breiten Menge von Dokumentteilen aus unterschiedlichen Dokumenten trainiert, ohne dass für jedes Dokument der weiteren Trainingsmenge eine manuelle Vorgabe erforderlich ist.

Dank der Erfindung ist es nicht erforderlich, eine Anzahl b vorzugeben, um die b am schlechtesten klassifizierten Dokumentteile auszuwählen. Vielmehr werden diejenigen Dokumentteile von Dokumenten der weiteren Trainingsmenge manuell klassifiziert, die der Start-Klassifikator mit geringem Klassifikations-Sicherheitsmaß klassifiziert hat. Der manuelle Aufwand wird um so geringer, je besser Start-Klassifikator ist. Damit lässt sich der manuelle Aufwand abhängig von der Leistung des Start-Klassifikators justieren.

Weiterhin lässt sich die Schranke für das Klassifikations-Sicherheitsmaß adaptieren an die gewünschte Klassifikationsgüte und an den manuellen Aufwand, der für die Klassifikation getrieben werden darf. Je mehr manueller Aufwand getrieben werden darf, desto geringer ist der Wert, der der Schranke zugeordnet wird.

Das lösungsgemäße Verfahren erfordert nicht, eine Relevanz von Dokumentteil-Arten vorzugeben, um die Klassifikation nur auf diese Dokumentteil-Arten zu konzentrieren. Ausreichend ist es, eine Liste mit möglichen Dokumentteil-Arten vorzugeben.

Vorzugsweise sind alle weiteren Trainingsmengen disjunkt zueinander und disjunkt zu der Start-Trainingsmenge. Dadurch wird derjenige Klassifikator auf jedes Dokument einer Trainingsmenge nur einmal angewendet. Dadurch wird verhindert, dass der Klassifikator in der Trainingsphase mehrmals auf dasselbe Dokument angewendet wird und dadurch "überadaptiert" an dieses eine Dokument wird.

Durch das lösungsgemäße Verfahren und die lösungsgemäße Vorrichtung werden Dokumentteile klassifiziert. Die möglichen

Dokumentteil-Arten hängen nicht von der Sprache oder den Sprachen ab, in der Dokument verfasst ist. Dadurch lässt sich der Klassifikator für Dokumente verschiedener Sprachen verwenden, idealerweise ohne Anpassungen des Klassifikators. Bereits diese Wirkung und dieser Vorteil unterscheidet das lösungsgemäße Verfahren von Verfahren zu Klassifikation eines Textes, durch die der Inhalt eines Dokuments klassifiziert werden soll. Dieser Inhalts-Klassifikator erfordert zwangsläufig eine Anpassung des Klassifikators an die Sprache oder die Sprachen des Dokuments.

Während der Trainingsphase klassifiziert jeder Klassifikator Dokumentteile von Dokumenten einer vorgegebenen Trainingsmenge. Im Höchstfall klassifiziert dieser Klassifikator jedes Dokumentteil jedes Dokuments der Trainingsmenge. Dadurch lässt sich die erforderliche Rechenzeit vorhersagen und dadurch begrenzen, wobei der Klassifikator diese Rechenzeit für die Trainingsmenge benötigt. Die Rechenzeit wäre viel höher und ließe sich nicht oder nur schwierig vorhersagen, wenn der Klassifikator alle Dokumentteile aller Dokumente in einem rechnerverfügbaren Archiv vor Beginn der Trainingsphase Klassifizieren würde, außer den Dokumentteilen, die zuvor während der Trainingsphase manuell klassifiziert wurden. Welche Dokumentteile schlecht klassifiziert wurden, steht erst während der Trainingsphase fest.

Vorzugsweise wird bei Bedarf auch nach Abschluss der ersten Trainingsphase noch ein Trainingsschritt durchgeführt. Der Klassifikator berechnet ein Klassifikations-Sicherheitsmaß für ein Dokumentteil, auch wenn dieser Klassifikator bereits produktiv verwendet wird. Ist dieses Klassifikations-Sicherheitsmaß kleiner als eine vorgegebene Schranke, so wird dieses Dokumentteil manuell klassifiziert, die Vorgabe, von welcher Dokumentteil-Art dieses Dokumentteil ist, wird erfasst und der produktiv verwendete Klassifikator wird mit diesem mindestens einen richtig klassifizierten Dokumentteil erneut trainiert.

Es ist dank der Lösung nicht erforderlich, die Dokumente vollständig zu entziffern. Dies erspart manuelle Arbeit, denn eine automatische Zeichenerkennung per optical character recognition ("OCR") wird immer Fehler liefern, die manuell korrigiert werden müssen.

Vorzugsweise wird der Klassifikator durch ein iteratives Vorgehen schrittweise verbessert. Hierfür wird eine Abfolge von weiteren Trainingsmengen vorgegeben. Eine Abfolge von Trainingsschritten wird durchgeführt. Der im vorigen Trainingsschritt generierte ("vorhergehende") Klassifikator wird mit Hilfe der aktuellen Trainingsmenge verbessert. Ein solches schrittweises Vorgehen lässt sich vorzeitig abbrechen, wenn ein Abbruchkriterium erfüllt ist, und liefert auch bei einem vorzeitigen Abbruch ein nachvollziehbares Ergebnis. Das Abbruchkriterium ist z. B., dass kein weiterer manueller Aufwand für die Klassifikation von Dokumentteilen mehr getrieben werden darf, oder dass der jeweilige weitere Klassifikator alle Dokumentteile aller Dokumente der jeweiligen weiteren Trainingsmenge ausreichend gut klassifiziert.

Vorzugsweise werden Dokumentteile unter Verwendung von graphischen Eigenschaften klassifiziert, z. B. Formatierungs-Eigenschaften (Schriftgröße absolut oder in Relation zu der Schriftgröße anderer Dokumentteile), Zeilenausrichtung, Aufzählungen und Nummerierungen, das Vorhandensein graphischer Elemente (Aufzählungszeichen, Bilder, ...). Diese graphischen Eigenschaften hängen nicht von der Sprache oder den Sprachen des Textes des Dokuments ab, weswegen der Klassifikator für Dokumente verschiedener Sprachen verwendet werden kann. Möglich ist, zusätzlich Schlagworte für die Klassifikation von Dokumentteilen zu verwenden.

Vorzugsweise wird in der Trainingsphase zunächst für jeweils ein Dokumentteil ein Klassifikations-Sicherheitsmaß berechnet. Dann, wenn dieses Klassifikations-Sicherheitsmaß unter einer vorgegebenen Schranke liegt, wird das Dokumentteil manuell klassifiziert und diese manuelle Vorgabe wird automatisch erfasst. Dies führt dazu, dass gezielt solche Dokumentteile manuell klassifiziert werden, die bislang schlecht klassifiziert wurden. Die Erfindung lässt sich dazu verwenden, um die Ergebnisse einer Suchmaschine zu verbessern. Eine Suchmaschine berechnet für jedes Dokument in einem Archiv jeweils ein Übereinstimmungsmaß zwischen dem Dokument und einer vorgegebenen Suchanfrage. Diese Suchanfrage hat ein suchender Benutzer in ein Bildschirmformular oder ähnliches eingegeben. Die Suchmaschine gibt die Suchergebnisse aus, und zwar vorzugsweise absteigendes sortiert nach Übereinstimmungsmaßen. Die Erfindung wird dazu benutzt, um Worte, die in bestimmten Dokumentteilen eines Dokuments und in einer Suchanfrage auftreten, höher zu gewichten als andere Worte. Beispielsweise wird ein Wort, das in einer Suchanfrage und außerdem in einer Überschrift eines Dokuments vorkommt, höher gewichtet als ein Wort der Suchanfrage, welches nur in einer Fußnote vorkommt.

Im Folgenden wird die Erfindung anhand eines Ausführungsbeispiels beschrieben. Dabei zeigen:
- Fig. 1: ein Beispiel für eine Zerlegung eines Zeitungsarti- kels in Layout-Dokumentteile;
- Fig. 2: ein Beispiel für einen wissenschaftlichen Artikel; und seine Zerlegung in logische Dokumentteile;
- Fig. 3: ein Beispiel für eine Rechnung eine Zerlegung der Rechnung in funktionale Dokumentteile;
- Fig. 4: eine Anordnung mit einem Client, einem Server, einem Archiv und einem produktiven Klassifikator;
- Fig. 5: eine generierende Datenverarbeitungsanlage;
- Fig. 6: im Überblick die Generierung des produktiven Klassi- fikators;
- Fig. 7: eine Generierung des Start-Klassifikators aus dem Initial-Klassifikator;
- Fig. 8: die Generierung eines Klassifikators aus dem vorher- gehenden Klassifikator durch einen Trainingsschritt.

Im Ausführungsbeispiel wird die Erfindung als Teil einer rechnerverfügbaren Suchmaschine eingesetzt. Diese Suchmaschine soll Suchbegriffe erfassen, die ein Benutzer vorgegeben hat, und rechnerverfügbare Dokumente finden, die in einem Datenspeicher, zum Beispiel einer Datenbank, abgespeichert sind und zur Suchanfrage passen. Dieser Datenspeicher mit den rechnerverfügbaren Dokumenten wird im Folgenden als "Archiv" bezeichnet. Das Archiv ist z. B. auf einem Server abgespeichert, der von verschiedenen Clients aus erreichbar ist. Die Suchmaschine wird realisiert durch ein Zusammenspiel mindestens eines Clients, der Suchanfragen eines Benutzers erfasst und an den Server übermittelt, und dem Server, der die Suchanfragen beantwortet. Auf dem Client ist vorzugsweise ein Internet-Zugriffsprogramm ("browser") installiert.

Jedes Dokument liegt in einer Form vor, in der ein Rechner das Dokument auswerten kann, zum Beispiel als Bitmap-Datei oder im "Portable Document Format" (PDF). Im Ausführungsbeispiel lagen zumindest einige Dokumente in Papierform vor und wurden eingescannt. Das Einscannen lieferte ein rechnerverfügbares Dokument, aber noch keine Informationen über den Inhalt des Dokuments oder über dessen Dokumentteile.

Im Ausführungsbeispiel gehörten alle Dokumente einer Sorte von Dokumenten an oder wurden vorab mindestens einer Dokument-Sorte zugeordnet, zum Beispiel jeweils eine der folgenden Sorten:
- Zeitungsartikel,
- Artikel aus einer wissenschaftlichen Fachzeitschrift,
- Patentliteratur,
- technische Gebrauchsanweisung,
- populärwissenschaftlicher Ratgeber,
- belletristischer Text,
- Rechnung,
- betriebswirtschaftliche Bilanz,
- medizinische Patientenakte und
- Grundbuchauszug.

Für jedes Dokument wird vorgegeben, welche möglichen Arten von Dokumentteilen ein Dokument haben kann. Welche Dokumentteil-Arten ein Dokument haben kann, liegt von der Sorte des Dokuments ab. Ein Zeitungsartikel hat zum Beispiel die möglichen Dokumentteil-Arten:
- Text,
- Graphik,
- Bild.

Dies sind drei Dokumentteil-Arten, die die Layout-Struktur eines Zeitungsartikels beschreiben.

Fig. 1 zeigt beispielhaft
- einen Zeitungsartikel,
- die Zerlegung dieses Zeitungsartikels in die Dokumentteile und
- die jeweilige Klassifizierung dieser Dokumentteile in einer Layout-Struktur.

Die Dokumentteile 1.1 sind von der Dokumentteil-Art "Text", die Dokumentteile 1.2 sind von der Art "Grafik" und die Dokumentteile 1.3 von der Art "Bild".

Ein wissenschaftlicher Artikel hat zum Beispiel die möglichen Dokumentteil-Arten:
- Titel,
- Kapitelüberschrift,
- Textabschnitt,
- Abbildung,
- Bildunterschrift,
- Tabelle,
- Seitenzahl.

Dies ist eine logische Struktur.

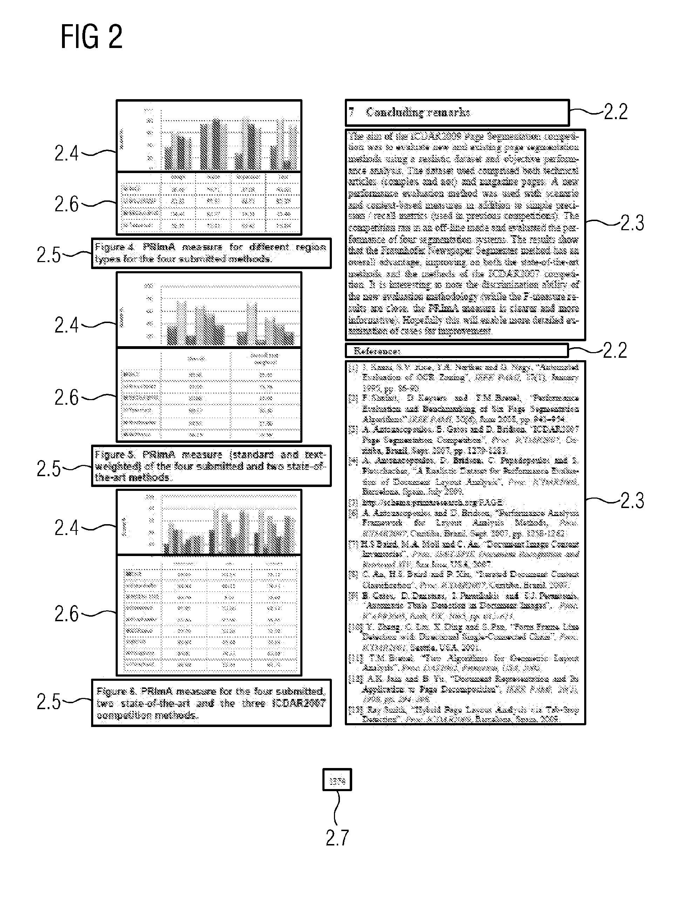

Fig. 2 zeigt beispielhaft einen wissenschaftlichen Artikel mit folgenden Dokumentteil-Arten:
2.1 "Titel",
2.2 "Kapitelüberschrift",
2.3 "Textabschnitt",
2.4 "Abbildung",
2.5 "Bildunterschrift",
2.6 "Tabelle" und
2.7 "Seitenzahl".

Ein wissenschaftlicher Artikel kann auch die folgenden möglichen Dokumentteil-Arten haben:
- Einleitung,
- Zusammenfassung ("abstract"),
- Abbildung,
- Beschreibung,
- Literaturverzeichnis ("references").

Dies sind funktionale Dokumentteil-Arten.

Eine Rechnung hat zum Beispiel die möglichen Dokumentteil-Arten:
- Rechnungsempfänger,
- Rechnungsabsender,
- Spezifikation der Bestellung (z.B. Datum, Bestellnummer etc.),
- Bezeichnung der Bestellung
- Fußtext (mit gesetzlichen Angaben zum Empfänger und/oder Absender der Rechnung).

Diese Dokumentteil-Arten beschreiben eine funktionale Struktur der Rechnung.

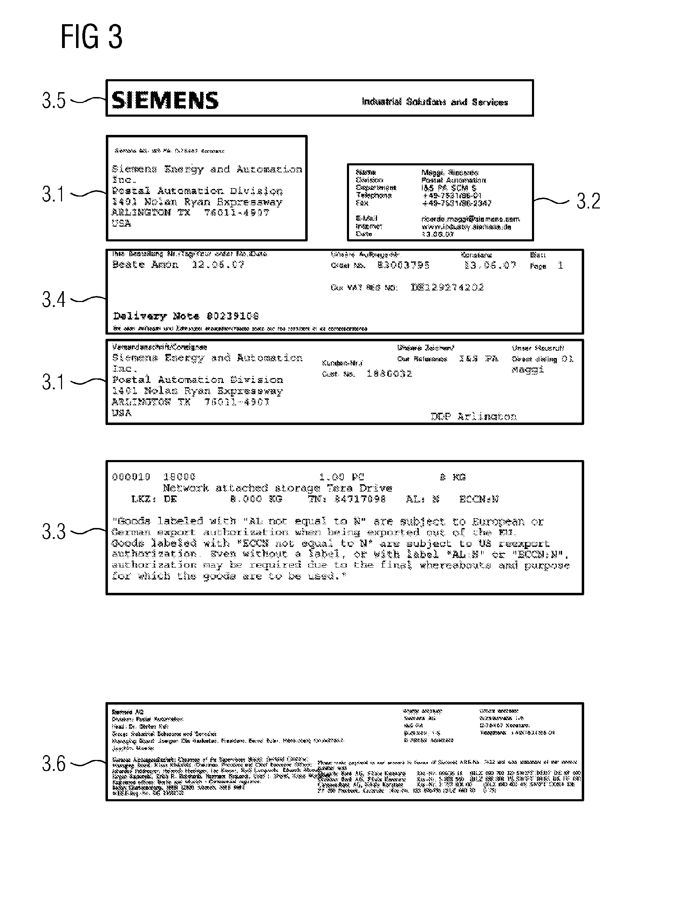

Fig. 3 zeigt beispielhaft eine Rechnung mit folgenden funktionalen Dokumentteil-Arten:
3.1 "Rechnungsempfänger",
3.2 "Rechnungsabsender",
3.3 "Informationen über Waren der Bestellung",
3.4 "Information über Bestellung",
3.5 "Rechnungskopf" und
3.6 "Rechnungsfußzeile".

Für jede Dokumentteil-Art wird jeweils eine Gewichtung vorgegeben. Um die Suchanfrage zu beantworten, werden die Gewichtungen der Dokumentteil-Arten verwendet.

Beispielsweise wird ein Dokument hoch gewichtet (hohes Übereinstimmungsmaß zwischen Suchanfrage und Dokument), wenn im Titel oder in einer Überschrift ein Wort auftritt, das auch in der Suchanfrage enthalten ist. Worte der Suchanfrage, die nur im laufenden Text auftreten, zählen geringer.

In einer Ausführungsform entziffert die OCR-Einheit das Dokument nicht vollständig, sondern nur alle diejenigen Dokumentteile, die von einer Dokumentteil-Art aus einer Menge von vorgegebenen Dokumentteil-Arten sind. Oder aber der Server zieht nur bestimmte Dokumentteil-Arten heran, um das Übereinstimmungsmaß zu berechnen, und verwendet andere Dokumentteil-Arten überhaupt nicht. Diese Ausführungsform spart Rechenzeit ein.

In allen diesen Ausgestaltungen werden für jedes Dokument die Informationen benötigt,
- aus welchen Dokumentteilen dieses Dokument besteht und
- von welcher Dokumentteil-Art jeweils ein Dokumentteil des Dokuments ist.

Diese beiden Informationen liefert ein rechnerverfügbarer Klassifikator, der jedes Dokument im Archiv automatisch analysiert. Vorzugsweise führt der Klassifikator seine Arbeit vorab aus und analysiert vorab jedes Dokument, bevor die Suchmaschine zur Verfügung gestellt wird. Das jeweilige Ergebnis, dass der Klassifikator angewendet auf ein Dokument liefert, wird abgespeichert. Dies erspart eine lange Antwortzeit bei der Beantwortung der Suchanfrage.

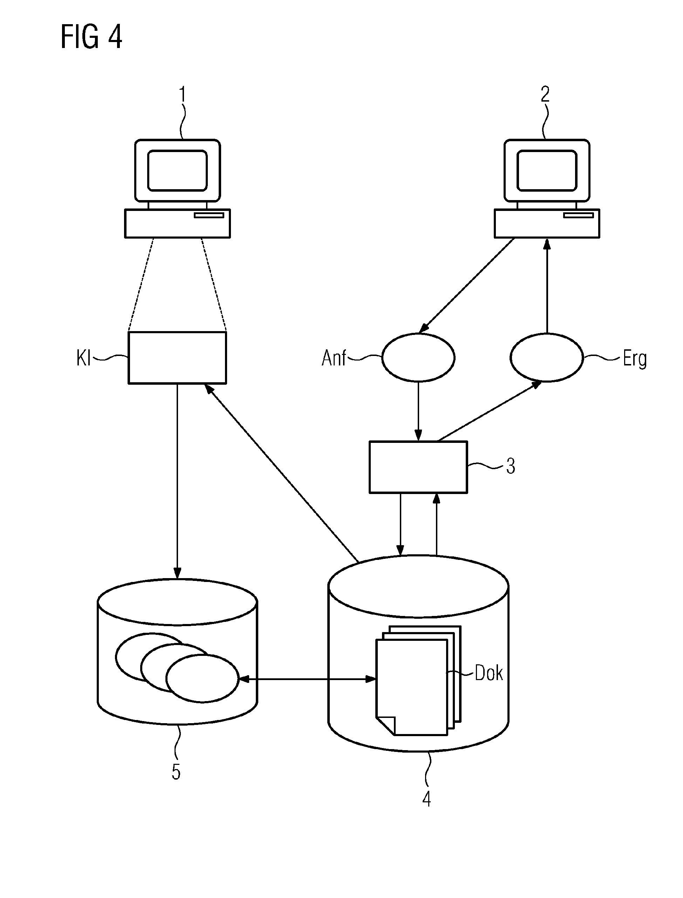

Fig. 4 zeigt eine Anordnung mit folgenden Bestandteilen:
- einem Klassifikationsrechner 1, der den produktiven Klassifikator Kl realisiert,
- einen Client 2 für Suchanfragen,
- einen Server 3 für die Beantwortung von Suchanfragen, die von Clients stammen,
- das Archiv 4 mit Dokumenten Dok und
- eine Datenbank 5, in dem diejenigen Zerlegungs- und Klassifikationsergebnisse abgespeichert werden, die der Klassifikator Kl angewendet auf die Dokumente des Archivs 4 liefert.

Der Klassifikationsrechner 1 kann ein handelsüblicher PC oder eine handelsübliche Workstation sein. Auf dem Gerät läuft ein Softwareprogramm, welches die Verfahrensschritte beim Klassifizieren der Dokumentteile durchführt.

Der Client 2 stellt eine Suchanfrage Anf an den Server 3. Vorzugsweise versendet das Internet-Zugriffsprogramm die Anfrage Anf über ein Datennetz, z. B. über das Internet oder über ein Intranet, an den Server 3. Der Server 3 durchsucht das Archiv 4 nach Dokumenten, die zur Suchanfrage Anf passen, und wertet hierfür die Einträge in der Datenbank 5 aus. Der Server 3 liefert eine Antwort in Form eines Suchergebnisses Erg an den anfragenden Client 2.

In der Datenbank 5 wird für jedes Dokument des Archivs 4 das jeweilige Ergebnis des Klassifikators Kl abgespeichert, also aus welchen Dokumentteilen das Dokument besteht und von welcher Dokumentteil-Art jedes Dokumentteil jeweils ist. Beispielsweise wird die Datenbank 5 erzeugt und mit Datensätzen gefüllt. Jeder Datensatz enthält Informationen über jeweils ein Dokument des Archivs 4, darunter eine Kennzeichnung, aus welchen Dokumentteilen das Dokument besteht, wo welches Dokumentteil anfängt und endet und von welcher Dokumentteil-Art dieses Dokumentteil ist.

Im Folgenden wird beispielhaft beschrieben, wie der produktive Klassifikator Kl und auch jeder während des Trainierens erzeugte Klassifikator S-Kl, Kl(1),...,Kl(M) Dokumentteile in einem rechnerverfügbaren Dokument erkennt und klassifiziert.

Zunächst zerlegt der Klassifikator das Dokument in graphische Dokument-Komponenten, beispielsweise in die einzelnen Zeilen jeder Seite. Besteht eine Seite des Dokuments aus mehreren Spalten, so erkennt der Klassifikator die Begrenzungslinie zwischen den Spalten und zerlegt jede Spalte in die einzelnen Zeilen.

Vorgegeben werden mehrere Merkmale, gemäß denen sich die Dokument-Komponenten klassifizieren lassen. Zu diesen Merkmalen gehören Formatierungs- und geometrische Merkmale. Beispiele für Formatierungsmerkmale sind Schriftgröße (absolut oder in Relation zur Schriftgröße anderer Dokumentteile) und Schriftstil (z. B. kursiv, fett). Beispiele für geometrische Merkmale sind die Zeilenausrichtung (z. B. links, rechts, Block, zentriert), Einrückungen und Zeilenabstände. Weitere Beispiele sind Aufzählungen und Nummerierungen.

Außerdem können inhaltliche Merkmale vorgegeben sein. Um den Wert eines inhaltlichen Merkmals zu berechnen, wird die Dokument-Komponente in Worte zerlegt, und die Worte werden per OCR erkannt. Inhaltliche Merkmale sind zum Beispiel das Vorkommen bestimmter Schlüsselworte oder bestimmte Zeichenmuster ("reguläre Ausdrücke"), zum Beispiel eine Ziffer und ein Punkt am Beginn einer Aufzählung.

Der Klassifikator berechnet für jede Dokument-Komponente und für jedes vorgegebene Merkmal, welchen Wert dieses Merkmal für diese Dokument-Komponente annimmt. Dadurch berechnet der Klassifikator für jede Dokument-Komponente jeweils einen Merkmalswerte-Vektor.

Der Klassifikator vergleicht den Merkmalswerte-Vektor jeder Dokument-Komponente mit Merkmalswerte-Vektoren benachbarter Dokument-Komponenten, zum Beispiel mit den Merkmalswerte-Vektoren von benachbarten Zeilen, also Zeilen oberhalb oder unterhalb dieser Zeile. Falls die beiden Merkmalswerte-Vektoren zweier benachbarter Dokument-Komponenten einen großen Abstand zueinander haben, so führt der Klassifikator automatisch mindestens einen der folgenden Schritte durch:
- Der Klassifikator legt zwischen die beiden Dokument-Komponenten eine Grenze, die zwei Dokumentteile trennt.
- Der Klassifikator zerlegt eine Dokument-Komponente in zwei Dokument-Komponenten, zum Beispiel eine Zeile in zwei Teilzeilen.
- Der Klassifikator fasst danach Dokument-Komponenten mit ähnlichen Merkmalswerte-Vektoren zu einem Dokumentteil zusammen. Hierbei nutzt der Klassifikator die Tatsache aus, dass jedes Dokumentteil typischerweise eine rechteckige Form hat, wobei das Rechteck parallel zu den Seitenrändern der Seiten des Dokuments ausgerichtet ist. Vorzugsweise wendet der Klassifikator ein Clustering-Verfahren an, um das Dokument in Dokumentteile zu zerlegen. Ein Beispiel für dieses Clustering-Verfahren ist die Methode "Docstrum", die z. B. in M.Agrawal, D.Doermann, a.a.O., beschrieben ist. Ein weiteres Verfahren wird in US 6542635 B1 beschrieben.
- Der Klassifikator aggregiert für jedes Dokumentteil die Merkmalswerte-Vektoren aller Dokument-Komponenten des Dokumentteils zu einem Merkmalswerte-Vektor des Dokumentteils.

Der produktive Klassifikator Kl wird mit dem Klassifikationsrechner 1 realisiert. Dieser Klassifikationsrechner 1 umfasst eine Recheneinheit, auf der ein Softwareprogramm abläuft, z. B. ein handelsüblicher PC oder eine handelsübliche Workstation sowie einen Bildschirm und verschiedene Eingabegeräte, zum Beispiel eine DV-Maus und eine Tastatur.

Der Klassifikator Kl hat Lesezugriff auf das Archiv 4 sowie auf einen Dokumentteil-Arten-Datenspeicher 6, in dem die möglichen Dokumentteil-Arten abgespeichert sind. Der Klassifikator Kl führt die eigentliche Klassifikationsaufgabe vollautomatisch durch. Jedoch werden im Ausführungsbeispiel das Bildschirmgerät und die Eingabegeräte benötigt, um
- den Klassifikator Kl zu trainieren und dem Benutzer manuelles Zerlegen eines Dokumentteils und klassifizieren von Dokumentteilen zu ermöglichen und
- das Klassifikationsergebnis einem Benutzer anzuzeigen, so dass dieser Benutzer das Klassifikationsergebnis, welches der Klassifikator Kl automatisch erzielt hat, überprüfen und korrigieren kann.

Für beide Aufgaben besitzt der Klassifikator Kl ein Bildschirmformular. In diesem Bildschirmformular wird angezeigt, welche Dokumentteile der Klassifikator Kl erkannt hat und von welcher Dokumentteilart jedes erkannte Dokumentteil ist.

Beispielsweise wird im Bildschirmformular je ein Rechteck um jedes Dokumentteil gelegt. Das Rechteck ist mit einer Kennzeichnung derjenigen Dokumentteil-Art versehen, die der Klassifikator Kl für dieses Dokumentteil erkannt hat, beispielsweise durch unterschiedliche Farben oder Striche des Rechtecks und/oder durch eine Legende.

Der Benutzer kann ein automatisch erzieltes Klassifikationsergebnis korrigieren. Beispielsweise legt der Benutzer ein Rechteck anders, weil der Klassifikator die Grenzen eines Dokumentteils falsch erkannt hat. Oder der Benutzer fasst zwei Dokumentteile zu einem einzigen Dokumentteil zusammen oder zerlegt ein Dokumentteil in zwei Dokumentteile. Oder der Benutzer ändert die automatisch getroffene Feststellung ab, von welcher Dokumentteil-Art ein Dokumentteil ist. Dem Benutzer wird im Bildschirmformular ein Auswahlmenü mit den möglichen Dokumentteil-Arten geboten, beispielsweise als Kontextmenü, das sich auf Mausklick öffnet.

Der Benutzer wählt ein Dokumentteil aus, beispielsweise indem der Benutzer in das Rechteck "klickt" oder die Umrandung des Rechtecks auswählt. Anschließend wählt der Benutzer eine derjenigen Dokumentteil-Arten aus, die im Auswahlmenü angeboten werden. Dadurch trifft der Benutzer eine Festlegung. Diese Festlegung des Benutzers wird im Archiv 4 oder dem Datenspeicher 5 als korrigierte Dokumentteil-Art dieses Dokumentteils abgespeichert.

Im Folgenden wird beschrieben, wie der Klassifikator Kl erzeugt wird. Der Klassifikator Kl wird mit Hilfe eines lernenden Verfahrens in mehreren Schritten aus einem vorgegebenen Initial-Klassifikator I-Kl erzeugt. Diese Erzeugung aus einem vorgegebenen Initial-Klassifikator wird "Trainieren" genannt. Für das Trainieren sind ein Trainingsrechner sowie mehrere Trainingsmengen vorgegeben, außerdem ein Trainingsprogramm in Form eines Softwareprogramms. Der Trainingsrechner kann der Klassifikationsrechner oder auch eine andere Datenverarbeitungsanlage sein. Der Initial-Klassifikator ist ein Software-programm, das noch nicht an die aktuelle Klassifikationsaufgabe, also an die zu analysierenden Dokumente, angepasst wurde. Der Initial-Klassifikator sowie das Trainingsprogramm laufen als Softwareprogramme auf dem Trainingsrechner.

Vorgegeben sind eine Start-Trainingsmenge S-TM sowie eine Abfolge TM(1),..., TM(M) von M weiteren Trainingsmengen. Jede Trainingsmenge TM(i) (i=1,..., M) besteht aus jeweils mehreren rechnerverfügbaren Dokumenten der zu analysierenden Dokumentsorte. Diese Dokumente sind z.B. im Archiv abgespeichert.

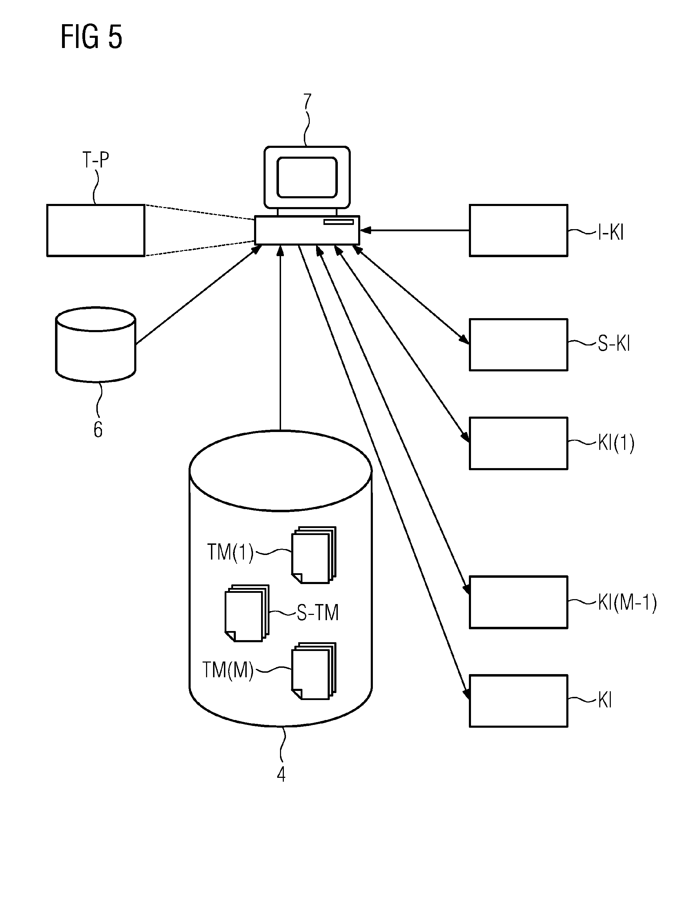

Fig. 5 zeigt eine Anordnung, um den produktiven Klassifikator Kl zu erzeugen. Dieser Anordnung besitzt eine generierende Datenverarbeitungsanlage 7, die den produktiven Klassifikator Kl generiert. Auf der generierenden Datenverarbeitungsanlage 7 läuft ein Trainingsprogramm T-P ab. Das Trainingsprogramm T-P hat Lesezugriff auf
- das Archiv 4,
- eine Datenbank mit den möglichen Dokumentteil-Arten sowie
- einen noch nicht trainierten Initial-Klassifikator I-Kl.

Im Archiv 4 sind die Start-Trainingsmenge S-TM und die M weitere Trainingsmengen TM(1),...,TM(M) abgespeichert.

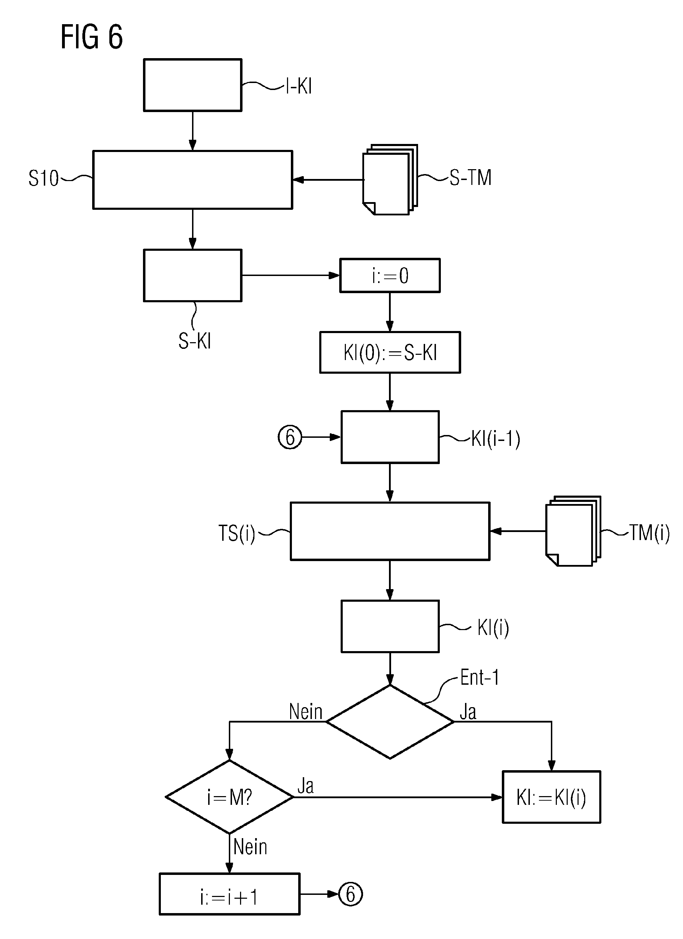

Fig. 6 zeigt im Überblick, wie der produktive Klassifikator Kl aus dem Initial-Klassifikator I-Kl generiert wird. Im Schritt S10 wird aus dem Initial-Klassifikator I-Kl der Start-Klassifikator S-Kl generiert. In jedem nachfolgenden Trainingsschritt Nummer i, mit TS(i) bezeichnet, werden jeweils mehrere Schritte ausgeführt, die im Folgenden erläutert werden.

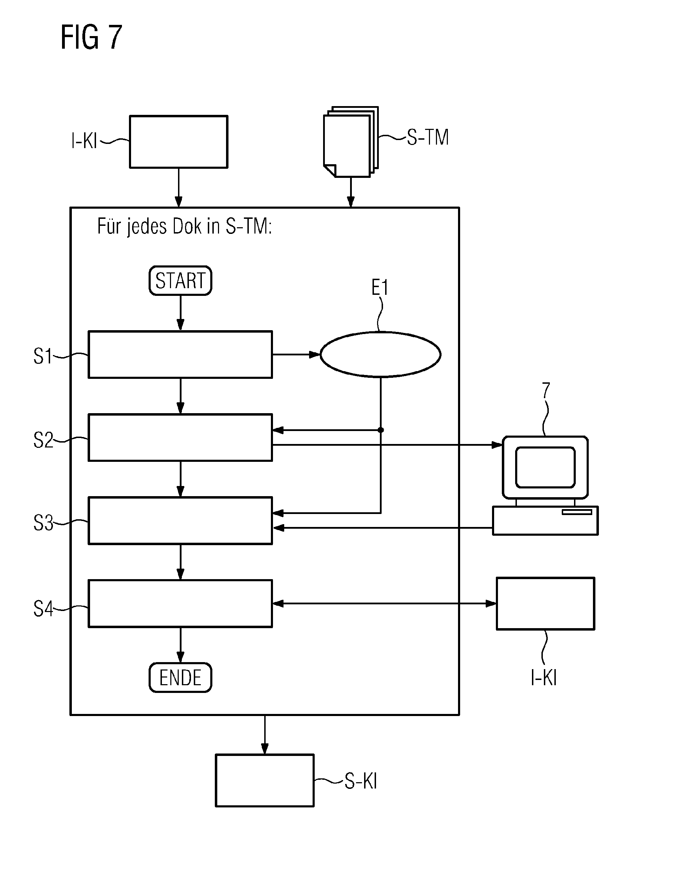

Im ersten Schritt des Trainierens wird der Initial-Klassifikator I-Kl mit der Start-Trainingsmenge S-TM trainiert. Fig. 7 veranschaulicht mittels eines Flussdiagramms, wie der Start-Klassifikator S-Kl mittels der Start-Trainingsmenge S-TM aus dem Initial-Klassifikator I-Kl erzeugt wird.

Fig. 7 zeigt somit den Schritt S10 von Fig. 6 im Detail.

Der Initial-Klassifikator I-Kl zerlegt jedes Dokument so wie oben beschrieben in Dokument-Komponenten und berechnet jeweils einen Merkmalswerte-Vektor für jede Dokument-Komponente. Mit Hilfe der Abstände zwischen Merkmalswerte-Vektoren zerlegt der Initial-Klassifikator I-Kl das Dokument in Dokumentteile (Schritt S1 von Fig. 7). Diese Zerlegung kann fehlerhaft sein.

Der Initial-Klassifikator I-Kl vermag im Ausführungsbeispiel nicht, die Dokumentteile zu klassifizieren, er vermag also nicht zu erkennen, von welcher Dokumentteil-Art jedes Dokumentteil jeweils ist. Daher werden nacheinander für jedes Dokument der Start-Trainingsmenge S-TM folgende Schritte durchgeführt:
Der Initial-Klassifikator I-Kl zerlegt das Dokument in seine Dokumentteile und ermittelt hierbei den Anfang und das Ende jedes Dokumentteils. Der Schritt S1 von Fig. 7 liefert das Ergebnis E1 von Fig. 7, also eine automatisch durchgeführte Zerlegung eines Dokuments in Dokumentteile.

In einem Bildschirmformular stellt das Trainingsprogramm T-P das Dokument dar. Um jedes automatisch erkannte Dokumentteil legt das Trainingsprogramm T-P im Bildschirmformular jeweils ein Rechteck (Schritt S2 von Fig. 7). In einem Auswahlmenü werden dem Benutzer die möglichen Dokumentteil-Arten für diese Dokument-Sorte angezeigt.

Bei Bedarf korrigiert der Benutzer die Zerlegung des Dokuments in Dokumentteile, indem der Benutzer Rechtecke versetzt oder neue Rechtecke setzt.

Der Benutzer wählt jedes Dokumentteil, das im Bildschirmformular dargestellt ist, aus. Bei Bedarf korrigiert der Benutzer so wie oben beschrieben die Zerlegung des Dokuments in Dokumentteile, welche der Initial-Klassifikator I-Kl automatisch vorgenommen hat.

Der Benutzer legt fest, von welcher Dokumentteil-Art das jeweilige Dokumentteil ist, das der Benutzer gerade ausgewählt hat. Hierfür wählt der Benutzer eine Dokumentteil-Art aus, die ihm im Auswahlmenü angeboten wird.

Das Trainingsprogramm T-P erfasst und erkennt die Festlegung des Benutzers automatisch und speichert diese Festlegung ab (Schritt S3 von Fig. 7).

Nachdem diese Schritte für jedes Dokument der Start-Trainingsmenge S-TM durchgeführt wurden, liegen für jedes Dokument der Start-Trainingsmenge S-TM die Informationen vor,
- aus welchen Dokumentteilen dieses Dokument besteht und
- von welcher Dokumentteil-Art jedes Dokumentteil des Dokuments jeweils ist.

Das Trainingsprogramm T-P "trainiert," den Initial-Klassifikator I-Kl mit den korrekt klassifizierten Dokumenteilen der Dokumente der Start-Trainingsmenge S-TM (Schritt S4 von Fig. 6). Dadurch erzeugt das Trainingsprogramm T-P aus dem Initial-Klassifikator I-Kl einen Start-Klassifikator S-Kl.

Das Trainingsprogramm T-P wendet ein lernendes Verfahren auf den Initial-Klassifikator I-Kl an und verwendet hierfür die Start-Trainingsmenge S-TM als Stichprobe. Beispielsweise ist der Initial-Klassifikator I-Kl als neuronales Netz ausgestaltet, und das Trainingsprogramm T-P adaptiert dessen Struktur und ändert Gewichtsfaktoren des neuronalen Netzes ab.

Oder das Trainingsprogramm T-P erzeugt einen Start-Klassifikator S-Kl in Form eines Entscheidungsbaums oder eines Polynom-Klassifikators oder eines Bayes-Klassifikators. Der Start-Klassifikator S-Kl klassifiziert ein Dokumentteil, indem er den Merkmalswerte-Vektor des Dokumentteils klassifiziert.

Anschließend wird aus dem Start-Klassifikator S-Kl durch ein iteratives Verfahren mit maximal M Schritten der produktiv eingesetzte Klassifikator Kl erzeugt. M ist hierbei gleich der Anzahl der weiteren Trainingsmengen TM(1),..., TM(M).

Im Trainingsschritt Nummer i (i=1,...,M) wird aus einem vorhergehenden Klassifikator Kl(i-1) ein nachfolgender Klassifikator Kl(i) generiert, wofür die Trainingsmenge TM(i) verwendet wird. Als erster vorhergehender Klassifikator Kl(0) wird der bereits erzeugte Start-Klassifikator S-Kl verwendet.

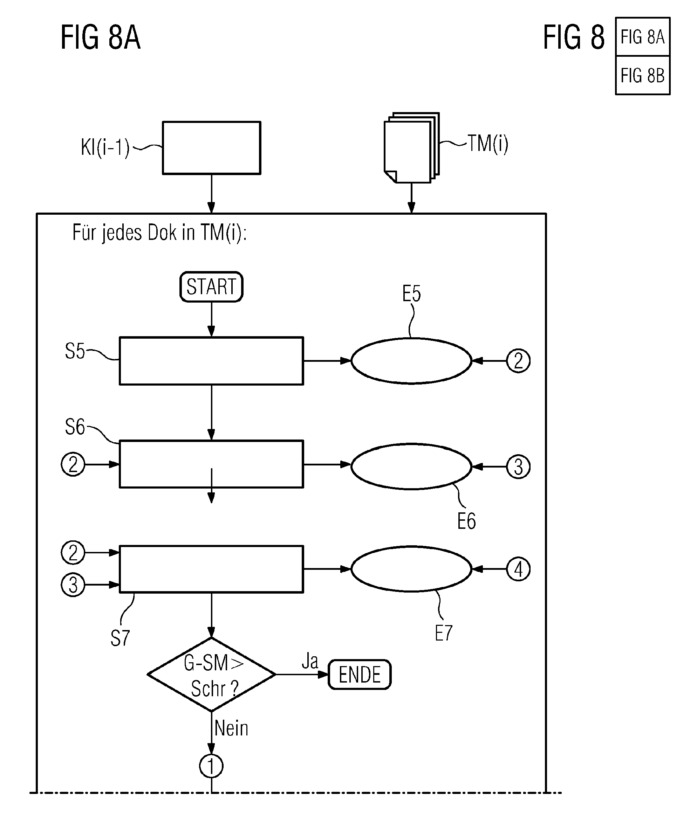

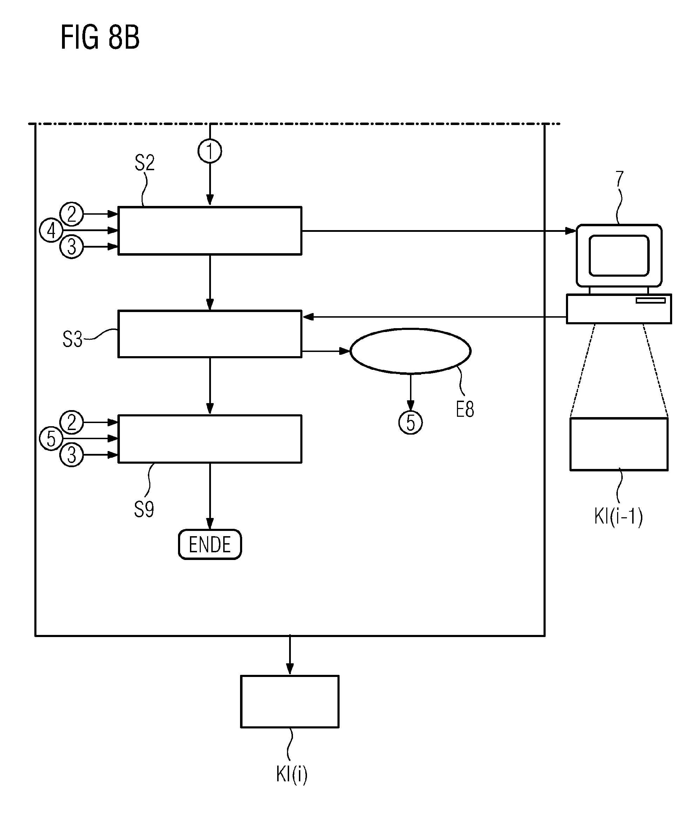

Fig. 8 veranschaulicht, wie im i-ten Trainingsschritt der Klassifikator Kl(i) aus dem vorhergehenden Klassifikator Kl(i-1) unter Verwendung der weiteren Trainingsmenge TM(i) erzeugt wird.

Fig. 8 veranschaulicht somit den i-ten Trainingsschritt TS(i) von Fig. 6 im Detail.

In jedem Trainingsschritt i (i=1,...,M) werden folgende Schritte für jedes Dokument der Trainingsmenge TM(i) durchgeführt:
Der vorhergehende Klassifikator Kl(i-1) zerlegt das Dokument automatisch in seine Dokumentteile (Schritt S5 von Fig. 8).
Der Schritt S5 liefert als Ergebnis E5 die automatisch durchgeführte Zerlegung des Dokuments durch den vorhergehenden Klassifikator Kl(i-1).
Der vorhergehende Klassifikator Kl(i-1) ermittelt für jedes Dokumentteil einerseits die Dokumentteil-Art dieses Dokumentteils (Schritt S6 von Fig. 8) und andererseits zwei Sicherheitsmaße für dieses Dokumentteil und seine Klassifizierung (Schritt S7 von Fig. 8). Der Schritt S6 liefert als Ergebnis E6 die Klassifikation der Dokumentteile, die der vorhergehende Klassifikator Kl(i-1) automatisch durchführt.

Das Zerlegungs-Sicherheitsmaß eines Dokumentteils ist ein Maß für die Sicherheit, dass der vorhergehende Klassifikator Kl(i-1) die Grenzen dieses Dokumentteils richtig berechnet hat. Das Klassifikations-Sicherheitsmaß eines Dokumentteils ist ein Maß für die Sicherheit, dass der vorhergehende Klassifikator Kl(i-1) dieses Dokumentteil richtig klassifiziert hat, also die richtige Dokumentteil-Art erkannt hat.

Das Zerlegungs-Sicherheitsmaß ist zum Beispiel umso größer, je geringer die Abstände zwischen den Merkmalswerte-Vektoren einer Dokument-Komponente sind. Das Klassifikations-Sicherheitsmaß ist umso größer, je sicherer der Klassifikator Kl(i-1) dem Merkmalswerte-Vektor des Dokumentteils einer vorgegebenen Dokumentteil-Art zuordnen konnte. Je größer ein Sicherheitsmaß ist, desto größer ist die Sicherheit, dass das betreffende Ergebnis vom jeweiligen Klassifikator richtig ist. Der Schritt S7 liefert als Ergebnis E7 die Zerlegungs- und Sicherheitsmaße für das Dokument, unter anderem ein Gesamt-Sicherheitsmaß G-SM.

Der vorhergehende Klassifikator Kl(i-1) berechnet ein Gesamt-Zerlegungs-Sicherheitsmaß G-SM für das Dokument, indem der Klassifikator Kl(i-1) die einzelnen Zerlegungs-Sicherheitsmaße für die Dokumentteile des Dokuments zu dem Gesamt-Zerlegungs-Sicherheitsmaß G-SM aggregiert. Hierfür wendet der vorhergehende Klassifikator Kl(i-1) eine Aggregationsvorschrift an, zum Beispiel das Minimum, das Produkt oder das geometrische oder arithmetische Mittel. Entsprechend aggregiert der vorhergehende Klassifikator Kl(i-1) die Klassifikations-Sicherheitsmaße für die Dokumentteile zu einem einzigen Gesamt-Klassifikations-Sicherheitsmaß für das Dokument. Aus den Sicherheitsmaßen berechnet der vorhergehende Klassifikator Kl(i-1) das Gesamt-Sicherheitsmaß G-SM für das Dokument.

Dann, wenn das Gesamt-Sicherheitsmaß G-SM für das Dokument kleiner als eine vorgegebenen Schranke Schr ist, zeigt das Trainingsprogramm das Dokument, dessen Dokumentteile und die Ergebnisse des vorhergehenden Klassifikators Kl(i-1) im Bildschirmformular an. Der Schritt S2 in Fig. 8 wird durchgeführt.

Vorzugsweise hebt das Trainingsprogramm T-P solche Dokumentteile hervor, die ein geringes Zerlegungs-Sicherheitsmaß oder ein geringes Klassifikations-Sicherheitsmaß besitzen. Dies weist den Benutzer auf diejenigen Dokumentteile hin, die der Benutzer auf jedem Fall darauf überprüfen sollte, ob die Zerlegung oder die Klassifikation unsicher ist.

Der Benutzer überprüft die Ergebnisse und korrigiert die Ergebnisse bei Bedarf. Falls also der vorhergehende Klassifikator Kl(i-1) die Grenzen eines Dokumentteils falsch gefunden hat, so korrigiert der Benutzer die Grenzen dieses Dokumentteils. Falls der vorhergehende Klassifikator Kl(i-1) ein Dokumentteil falsch klassifiziert hat, so wählt der Benutzer dieses Dokumentteil im Bildschirmformular aus und legt die richtige Dokumentteil-Art im Auswahlmenü fest.

Das Trainingsprogramm T-P erkennt die Festlegung des Benutzers automatisch und speichert diese Festlegung ab (Schritt S3 in Fig. 8).

Vorzugsweise zeigt das Trainingsprogramm T-P auf dem Bildschirmformular einen Bereich eines Dokuments, z.B. eine Seite, mit mindestens einem nur unsicher begrenzten oder klassifizierten Dokumentteil des Dokuments an. Der Benutzer korrigiert bei Bedarf die Grenzen oder die Klassifikation von Dokumentteilen dieses Bereichs. Der Benutzer nimmt anschließend eine Eingabe vor, mit der der Benutzer kennzeichnet, dass alle Grenzen und Klassifizierungen für diesen Bereich nunmehr korrekt sind. Damit bestätigt der Benutzer, dass der vorhergehende Klassifikator Kl(i-1) solche Dokumentteile richtig klassifiziert hat, für die der Benutzer keine Änderungen vorgenommen hat. Diese Vorgaben für den Bereich verwendet das Trainingsprogramm T-P für das Trainieren des vorhergehenden Klassifikators Kl(i-1).

Im Trainingsschritt i zeigt das Trainingsprogramm T-P also nicht alle Dokumente der Trainingsmenge TM(i) im Bildschirmformular an, und der Benutzer braucht nicht alle Dokumente zu überprüfen, sondern nur diejenigen, die der vorhergehende Klassifikator Kl(i-1) möglicherweise falsch klassifiziert hat. Dies sind diejenigen Dokumente, die ein geringes Gesamt-Sicherheitsmaß und daher vermutlich begrenzte oder falsch klassifizierte Dokumentteile haben.

In einer Ausgestaltung hebt das Trainingsprogramm T-P im Bildschirmformular diejenigen Dokumentteile hervor, die ein geringes Sicherheitsmaß haben, also ein Sicherheitsmaß, das kleiner ist als eine vorgegebene Schranke. Der Benutzer braucht nur diese Dokumentteile zu überprüfen und bei Bedarf zu korrigieren, kann aber auch andere Dokumentteile korrigieren.

Das Trainingsprogramm T-P trainiert anschließend den vorhergehenden Klassifikator Kl(i-1) mit den Dokumenten und Dokumentteilen der Trainingsmenge TM(i), die manuell überprüft oder bei Bedarf korrigiert wurden (Schritt S9 von Fig. 8). Hierfür verwendet das Trainingsprogramm T-P
- die Zerlegung des Dokuments in Dokumentteile (Ergebnis E5), die der vorhergehende Klassifikator Kl(i-1) durchgeführt hat,
- die automatisch durchgeführte Klassifikation der Dokumentteile (Ergebnis E6) und
- die manuellen Vorgaben und Bestätigungen des Benutzers für die Zerlegung und die Klassifikation (Ergebnis E8).

Dadurch wird aus dem vorhergehenden Klassifikator Kl(i-1) der nachfolgende Klassifikator Kl(i) erzeugt. Damit ist der i-te Trainingsschritt TS(i) beendet.

In einer Ausgestaltung ist die Trainingsmenge TM(i) eine Teilmenge der Trainingsmenge TM(i+1), die weiteren Trainingsmengen werden von Trainingsschritt zu Trainingsschritt also immer umfangreicher. Dafür wird auch der jeweilige Klassifikator immer besser.

Die Durchführung der Trainingsschritte wird spätestens nach dem Trainingsschritt Nummer M abgebrochen. Möglich ist, dass die Durchführung bereits vorher abgebrochen wird, weil ein vorgegebenes Abbruchkriterium erfüllt ist. Dieses Abbruchkriterium ist insbesondere dann erfüllt, wenn der vorhergehende Klassifikator Kl(i-1) alle Dokumentteile aller Dokumente der Trainingsmenge TM(i) so gut klassifiziert, dass alle Sicherheitsmaße größer oder gleich einer vorgegebenen Schranke sind. Ob der Klassifikator Kl(i) das vorgegebene Abbruchkriterium erfüllt, wird in Fig. 6 in der Entscheidung Ent-1 überprüft. Falls das Abbruchkriterium nicht erfüllt ist, wird ein nachfolgender Trainingsschritt Nummer i+1 durchgeführt.

Derjenige Klassifikator, der aus dem zuletzt durchgeführten Trainingsschritt hervorgeht, wird produktiv verwendet, um alle Dokumente des "Archivs" automatisch zu analysieren und alle Dokumentteil-Arten zu ermitteln.

Der produktive Klassifikator Kl zerlegt ein Dokument Dok des Archivs 4 in Dokument-Komponenten und berechnet für jede Dokument-Komponente jeweils einen Merkmalswerte-Vektor. Mit Hilfe dieser Merkmalswerte-Vektoren erkennt der Klassifikator Kl die Dokumentteile des Dokuments und berechnet jeweils einen Merkmalswerte-Vektor jedes Dokumentteils. Die Wertebereiche der vorgegebenen Merkmale spannen einen Merkmalswerte-Raum auf, der genauso viele Dimensionen hat, wie es vorgegebene Merkmale gibt. Jede Dokumentteil-Art ist durch einen Teilbereich in diesem Merkmalswerte-Raum gekennzeichnet. Der Klassifikator Kl stellt für jedes Dokumentteil fest, in welchen Teilbereich dessen Merkmalswerte-Vektor fällt.

In einer Ausgestaltung wird auch der produktiv eingesetzte Klassifikator noch verbessert, indem in einer erneuten Trainingsphase der Klassifikator erneut trainiert wird. Insbesondere in dieser Ausgestaltung berechnet der Klassifikator (Kl) bevorzugt ein Zerlegungs-Sicherheitsmaß und ein Klassifikations-Sicherheitsmaß für jedes Dokumentteil. Ein Klassifikations-Sicherheitsmaß eines Dokumentteils ist zum Beispiel umso größer, je weiter der Merkmalswerte-Vektor dieses Dokumentteils vom Rand des Teilbereichs im Merkmalswerte-Raum für eine Dokumentteil-Art entfernt ist.

Ist ein Sicherheitsmaß kleiner als eine vorgegebene Schranke, so wird das Dokument auf einem Bildschirmgerät dargestellt, zum Beispiel in dem oben beschriebenen Bildschirmformular. Jedes unsicher erkannte oder unsicher klassifizierte Dokumentteil des Dokuments wird hervorgehoben dargestellt.

Der Benutzer bestätigt diese Grenzen und die Dokumentteil-Art des Dokumentteils oder korrigiert diese automatischen Klassifikationsergebnisse. Das Trainingsprogramm T-P wird erneut aktiviert und trainiert den produktiven Klassifikator Kl. Jedes Dokument, dessen Klassifikationsergebnis der Benutzer manuell überprüft hat, gehört zu einer Trainingsmenge dieses Trainingsvorgangs.

### Bezugszeichenliste

| *Bezugszeichen* | *Bedeutung* |
|---|---|
| 1 | Klassifikationsrechner |
| 1.1 | Dokumentteil-Art "Text" |
| 1.2 | Dokumentteil-Art "Graphik" |
| 1.3 | Dokumentteil-Art "Bild" |
| 2 | Client für Suchanfragen |
| 2.1 | Dokumentteil-Art "Titel" |
| 2.2 | Dokumentteil-Art "Kapitelüberschrift" |
| 2.3 | Dokumentteil-Art "Textabschnitt" |
| 2.4 | Dokumentteil-Art "Abbildung" |
| 2.5 | Dokumentteil-Art "Bildunterschrift" |
| 2.6 | Dokumentteil-Art "Tabelle" |
| 2.7 | Dokumentteil-Art "Seitenzahl" |
| 3 | Server für Suchanfragen |
| 3.1 | Dokumentteil-Art "Rechnungsempfänger" |
| 3.2 | Dokumentteil-Art "Rechnungsabsender" |
| 3.3 | Dokumentteil-Art "Information über Ware der Bestellung" |
| 3.4 | Dokumentteil-Art "Information über Bestel- lung" |
| 3.5 | Dokumentteil-Art "Rechnungskopf" |
| 4 | Archiv mit rechnerverfügbaren Dokumenten |
| 5 | Datenbank mit Klassifikationsergebnissen |
| 6 | Datenbank mit den möglichen Dokumentteil-Arten |
| 7 | generierende Datenverarbeitungsanlage, die den produktiven Klassifikator Kl erzeugt |
| Anf | Suchanfrage |
| Anf | Suchanfrage, das der Client 2 an den Server 3 richtet |
| Dok | Dokument im Archiv 4 |
| E1 | automatisch durchgeführte Zerlegung des Dokuments durch den Start-Klassifikator S-Kl |
| E5 | automatisch durchgeführte Zerlegung des Dokuments durch den vorhergehenden Klassifikator Kl(i-1) |
| E6 | automatisch durchgeführte Klassifikation der Dokumentteile eines Dokuments |
| E7 | Sicherheitsmaße für das Dokument |
| E8 | manuell zerlegtes Dokument doc; manuell klassifizierte Dokumentteile |
| Erg | Ergebnis, dass der Server 3 als Reaktion auf die Suchanfrage Anf an den Client 2 übermittelt |
| Erg | Ergebnisliste vom Server 3 |
| Ent-1 | Entscheidung: erfüllt Klassifikator Kl(i) Abbruchkriterium? |
| G-SM | Gesamt-Sicherheitsmaß für ein Dokument |
| I-Kl | Initial-Klassifikator |
| Kl | produktiver Klassifikator |
| Kl(i) | Klassifikator, der durch Trainieren des vorhergehenden Klassifikators Kl(i-1) mit der Trainingsmenge TM(i) erzeugt wird |
| Kl(i) | Klassifikator, der im Trainingsschritt i durch Training mit der Trainingsmenge TM(i) aus den vorhergehenden Klassifikator Kl(i-1) hervorgeht |
| M | Anzahl der weiteren Trainingsmengen |
| S-Kl | Start-Klassifikator |
| S1 | Initial-Klassifikator I-Kl zerlegt Dokument in Dokumentteile |
| S2 | Trainingsprogramm T-P stellt Dokumentteile auf Bildschirm dar |
| S3 | Trainingsprogramm T-P erfasst Benutzereingaben |
| S4 | Trainingsprogramm T-P trainiert InitialKlassifikator I-Kl mit Dokument |
| S5 | vorhergehender Klassifikator Kl(i-1) zerlegt Dokument in Dokumentteile |
| S6 | vorhergehender Klassifikator Kl(i-1) klassifiziert Dokumentteil |
| S7 | vorhergehender Klassifikator Kl(i-1) berechnet Sicherheitsmaße für die Dokumentteile und Gesamtsicherheitsmaß für das Dokument |
| S9 | Trainingsprogramm T-P trainiert vorhergehenden Klassifikator Kl(i-1) mit Dokument |
| S10 | Der Start-Klassifikator S-Kl wird aus dem Initial-Klassifikator I-Kl generiert |
| Schr | vorgegebene untere Schranke für das Gesamt-Sicherheitsmaß eines Dokuments |
| TM(1)...,TM(M) | weitere Trainingsmengen |
| T-P | Trainingsprogramm |
| TS(i) | Im Trainingsschritt Nummer i wird aus dem vorhergehenden Klassifikator Kl(i-1) der Klassifikator Kl(i) erzeugt |

## Patentansprüche

1. Verfahren zum Analysieren eines rechnerverfügbaren Dokuments (Dok),
wobei das Dokument (Dok) mindestens ein Dokumentteil umfasst,
mehrere mögliche Dokumentteil-Arten vorgegeben werden und das Analysieren die automatisch durchgeführten Schritte umfasst, dass
- das Dokument (Dok) in seine Dokumentteile zerlegt wird und
- eine Datenverarbeitungsanlage (1) mit einem Klassifikator (Kl) für jedes Dokumentteil des Dokuments (Dok) feststellt, von welcher Dokumentteil-Art dieses Dokumentteil ist,
- in einer vorhergehenden Trainingsphase aus einem vorgegebenen Initial-Klassifikator (I-Kl) unter Verwendung einer vorgegebenen Stichprobe der Klassifikator (Kl) generiert wird,
wobei die Stichprobe eine Start-Trainingsmenge (S-TM) und mindestens eine weitere Trainingsmenge (TM(1),...,TM(M)) umfasst,
jede Trainingsmenge (S-Kl, Tm(1),...,TM(M)) jeweils mindestens ein rechnerverfügbares Dokument umfasst,
zunächst aus dem Initial-Klassifikator (I-Kl) unter Verwendung der Start-Trainingsmenge (S-TM) ein Start-Klassifikator (S-Kl) generiert wird und
anschließend aus dem Start-Klassifikator (S-Kl) unter Verwendung der weiteren Trainingsmenge (TM(1),...,TM(M)) der Klassifikator (Kl) generiert wird,
wobei die Generierung des Start-Klassifikators (S-Kl) die automatisch durchgeführten Schritte umfasst, dass
- jedes Dokument der Start-Trainingsmenge (S-TM) in Dokumentteile zerlegt wird und
- für jedes Dokumentteil jedes Dokuments der Start-Trainingsmenge (S-TM) eine Vorgabe, von welcher Art dieses Dokumentteil ist, erfasst wird und
- der Initial-Klassifikator (I-Kl) mit den erfassten Dokumentteil-Arten der Start-Trainingsmenge (S-TM) trainiert wird,
wobei bei der Generierung des Klassifikators (Kl) für jedes Dokument der weiteren Trainingsmenge (TM(1),..., TM(M)) automatisch die Schritte durchgeführt werden, dass
- das Dokument in seine Dokumentteile zerlegt wird,
- der Start-Klassifikator (S-Kl) für jedes Dokumentteil ermittelt, von welcher Dokumentteil-Art dieses Dokumentteil ist,
- der Start-Klassifikator (S-Kl) ein Klassifikations-Sicherheitsmaß (G-SM) für das Dokument berechnet - das ist ein Maß für die Sicherheit, mit der der Start-Klassifikator (S-Kl) die Dokumentteil-Arten für dieses Dokument ermittelt hat - und
dann, wenn dieses Klassifikations-Sicherheitsmaß (G-SM) kleiner als eine vorgegebene Schranke (Schr) ist,
für mindestens ein Dokumentteil des Dokuments eine Vorgabe, von welcher Art dieses Dokumentteil ist, erfasst wird,
wobei bei der Generierung des Klassifikators (Kl) anschließend der Start-Klassifikator (S-Kl) mit den erfassten Dokumentteil-Arten der weiteren Trainingsmenge (TM(1),...,TM(M)) trainiert wird.

2. Verfahren nach Anspruch 1,
**dadurch gekennzeichnet, dass**
mehrere weitere Trainingsmengen (TM(1),..., TM(M)) und eine Abfolge unter diesen Trainingsmengen vorgegeben werden,
nacheinander für jede Trainingsmenge (TM(1),...TM(M)) der Abfolge ein Trainingsschritt (TS(i)) mit dieser Trainingsmenge durchgeführt wird,
bei dem Trainingsschritt (TS(i)) aus einem vorhergehenden Klassifikator (Kl(i-1)) unter Verwendung der Trainingsmenge ein nachfolgender Klassifikator (Kl(i)) generiert wird,
wobei für die erste Trainingsmenge (TM(1),...TM(M)) im ersten Trainingsschritt der Abfolge als vorhergehender Klassifikator (Kl(0)) der Start-Klassifikator (S-Kl) verwendet wird und
der letzte Trainingsschritt den zum Analysieren verwendeten Klassifikator (Kl) liefert,
wobei in jedem Trainingsschritt (TS(i)) für jedes Dokument der weiteren Trainingsmenge (TM(i)) beim Ausführen des Trainingsschritts (TS(i)) automatisch die Schritte durchgeführt werden, dass
- das Dokument in Dokumentteile zerlegt wird,
- der vorhergehende Klassifikator (Kl(i-1)) für jedes Dokumentteil ermittelt, von welcher Dokumentteil-Art dieses Dokumentteil ist,
- der vorhergehende Klassifikator (Kl(i-1)) ein Klassifikations-Sicherheitsmaß (G-SM) für das Dokument berechnet und
- dann wenn dieses Klassifikations-Sicherheitsmaß (G-SM) kleiner als eine vorgegebene Schranke (Schr) ist, für mindestens ein Dokumentteil des Dokuments eine Vorgabe, von welcher Art dieses Dokumentteil ist, erfasst wird und
in jedem Trainingsschritt (TS(i)) anschließend der vorhergehende Klassifikator (K(i-1)) mit den Dokumentteil-Arten der weiteren Trainingsmenge (TM(i)) trainiert wird.

3. Verfahren nach Anspruch 2,
**dadurch gekennzeichnet, dass**
jede Trainingsmenge (TM(i)) der Abfolge
eine Teilmenge der in der Abfolge nachfolgenden Trainingsmenge (TM(i+1)) ist.

4. Verfahren nach Anspruch 2 oder Anspruch 3,
**dadurch gekennzeichnet, dass**
die Trainingsmengen (TM(1),...,TM(M)) der Abfolge paarweise disjunkt sind.

5. Verfahren nach einem der Ansprüche 1 bis 4,
**dadurch gekennzeichnet, dass**
bei der Generierung des Klassifikators (Kl) für mindestens ein Dokument der weiteren Trainingsmenge (TM(1),...,TM(M)) die Berechnung des Klassifikations-Sicherheitsmaßes (G-SM) für dieses Dokument den Schritt umfasst,
ein Klassifikations-Sicherheitsmaß für ein Dokumentteil dieses Dokuments zu berechnen, und
dann, wenn dieses Klassifikations-Sicherheitsmaß unter einer vorgegebenen Schranke liegt,
eine Vorgabe, von welcher Art dieses Dokumentteil ist, erfasst wird.

6. Datenverarbeitungsanlage (7) zum Generieren eines Klassifikators (Kl) zum Analysieren eines rechnerverfügbaren Dokuments (Dok), wobei
- das Dokument (Dok) mindestens ein Dokumentteil umfasst,
- der generierte Klassifikator (Kl) Bestandteil einer Datenverarbeitungsanlage (1) ist,
- die einen Datenspeicher (6) mit mehreren möglichen Dokumentteil-Arten umfasst,
- der generierte Klassifikator (Kl) zum automatischen Durchführen der Schritte ausgestaltet ist,
- das Dokument (Dok) in seine Dokumentteile zu zerlegen
und
- für jedes Dokumentteil festzustellen, von welcher Dokumentteil-Art dieses Dokumentteil ist,
die generierende Datenverarbeitungsanlage (7)
- einen Initial-Klassifikator (I-Kl) und
- einen Datenspeicher (4) mit einer Start-Trainingsmenge (S-TM) und mindestens einer weiteren Trainingsmenge (TM(1),...,TM(M))
umfasst,
jede Trainingsmenge (S-TM, TM(1),...,TM(M)) jeweils mindestens ein rechnerverfügbares Dokument umfasst,
die generierende Datenverarbeitungsanlage (7) dazu ausgestaltet ist,
- zunächst aus dem Initial-Klassifikator (I-Kl) unter Verwendung der Start-Trainingsmenge (S-TM) einen Start-Klassifikator (S-Kl) zu generieren und
- anschließend aus dem Start-Klassifikator (S-Kl) unter Verwendung der mindestens einen weiteren Trainingsmenge (TM(1),...,TM(M)) den Klassifikator (Kl) zu generieren, wobei die generierende Datenverarbeitungsanlage (7) dazu ausgestaltet ist,
bei der Generierung des Start-Klassifikators (S-Kl) die automatisch durchgeführten Schritte auszuführen,
- jedes Dokument der Start-Trainingsmenge (S-TM) in seine Dokumentteile zu zerlegen,
- für jedes Dokumentteil jedes Dokuments der Start-Trainingsmenge (S-TM) eine Vorgabe, von welcher Art dieses Dokumentteil ist, zu erfassen und
- den Initial-Klassifikator (I-Kl) mit den erkannten Dokumentteil-Arten der Start-Trainingsmenge (S-TM) zu trainieren,
wobei die generierende Datenverarbeitungsanlage (7) weiterhin dazu ausgestaltet ist,
bei der Generierung des Klassifikators (Kl) für jedes Dokument der weiteren Trainingsmenge (TM(1),...,TM(M) automatisch die Schritte durchzuführen,
- das Dokument in seine Dokumentteile zu zerlegen,
- dass der Start-Klassifikator (S-Kl) für jedes Dokumentteil ermittelt, von welcher Dokumentteil-Art dieses Dokumentteil ist,
- dass der Start-Klassifikator (S-Kl) ein Klassifikations-Sicherheitsmaß (G-SM) für das Dokument berechnet - das ist ein Maß für die Sicherheit, mit der der Start-Klassifikator (S-Kl) die Dokumentteil-Arten für dieses Dokument ermittelt hat - und
- dann, wenn dieses Klassifikations-Sicherheitsmaß (G-SM) kleiner als eine vorgegebenen Schranke (Schr) ist,
für mindestens ein Dokumentteil des Dokuments eine Vorgabe, von welcher Art dieses Dokumentteil ist, zu erfassen,
wobei die generierende Datenverarbeitungsanlage (7) bei der Generierung des Klassifikators (Kl) anschließend den Start-Klassifikator (S-Kl) mit dem Dokumentteil-Arten der weiteren Trainingsmenge (TM(1),...,TM(M)) trainiert.

7. Datenträger, auf dem ein Software-Programm abgespeichert ist,
welches dann, wenn das Programm von einer Datenverarbeitungsanlage ausgeführt wird,
dazu führt, dass die Datenverarbeitungsanlage ein Verfahren gemäß einem der Ansprüche 1 bis 5 ausführt.
